# FASCICULE DE BREVET EUROPEEN

(11) **EP 2 560 880 B1**
(45) Date de publication et mention de la délivrance du brevet: **19.09.2018**
(21) Numéro de dépôt: 11714993.0
(22) Date de dépôt: 19.04.2011
(51) Int. Cl.: B64G 1/58, F16L 59/04, C08L 97/00, C08L 83/04, C08L 61/06, C08K 7/28, C09K 5/18, C08K 5/00, C08K 7/04

(54) **MATERIAU DE PROTECTION THERMIQUE**
WÄRMESCHUTZMATERIAL
THERMAL PROTECTION MATERIAL

(30) Priorité: 22.04.2010 FR 1053089
(43) Date de publication de la demande: 27.02.2013
(73) Titulaire: ArianeGroup SAS, 75015 Paris (FR)
(72) Inventeur: PLAINDOUX, Cédric, F-33200 Bordeaux (FR); BOUILLY, Jean-Marc, F-33160 Saint Medard En Jalles (FR)
(74) Mandataire: Ipside
(86) Numéro de dépôt international: PCT/EP2011/056271
(87) Numéro de publication internationale: WO 2011/131694

(56) Documents cités:
- EP-A2- 1 482 163
- WO-A2-2011/014085
- CH-A- 274 859
- GB-A- 879 411
- US-A- 2 087 942
- US-A- 4 031 059
- US-A- 5 064 868
- RECULUSA ET AL: "Formation of low-density carbon materials through thermal degradation of a cork-based composite", CARBON, ELSEVIER, OXFORD, GB, vol. 44, no. 7, 1 juin 2006 (2006-06-01), pages 1316-1320, XP025010899, ISSN: 0008-6223, DOI: DOI:10.1016/J.CARBON.2005.12.051

## Description

La présente invention concerne les matériaux de protection thermique, du type de ceux utilisés dans le domaine spatial. Ces matériaux sont destinés à protéger des structures ou des équipements contre des sollicitations thermiques très importantes, mais pendant des durées courtes ne dépassant pas quelques minutes.

Ces matériaux sont nécessaires de façon générale lors des phases de traversée de l'atmosphère des planètes, que ce soit au lancement ou à la rentrée.

Ils sont aussi utilisés comme protection envers les sources chaudes des lanceurs ou véhicules spatiaux, comme les systèmes de propulsion.

Les capacités naturelles d'isolation thermique du liège associées à un liant résistant à des hautes températures permettent son utilisation dans les industries aérospatiales et militaires pour de telles applications.

Il existe de nombreuses réalisations de matériaux de protection thermique et notamment le document US 2001/0036505 A1 concerne une composition poreuse comprenant des particules de liège et un liant, le document US 4 204 899 concerne la réalisation d'un matériau de protection thermique ablatif comprenant du liège finement divisé et une résine thermodurcissable et le document EP 1 493 788A1 décrit un matériau ablatif de protection thermique pour l'entrée atmosphérique d'un véhicule spatial comportant du liège et du silicone pouvant être projeté sur une surface.

Le document US2005/0096414 A1 décrit pour sa part un matériau de protection thermique comprenant une résine silicone, un catalyseur silicone, du liège, des écosphères de verre et un solvant silicone, la résine silicone étant présente dans une quantité de 65,3 à 72,3 pourcent massique.

Un matériau utilisé est aussi le matériau connu sous la marque NORCOAT du groupe EADS.

Ce matériau comprend 100 parties pondérales de liège 0,5 à 1 mm, 35 parties pondérales de résine phénolique, un fongicide et un ignifugeant.

L'objectif de la présente invention est d'optimiser en termes de performance massique les matériaux existants vis-à-vis d'une application à haut flux, jusqu'à 10 MW/m2, et d'obtenir des matériaux nettement moins denses que les matériaux actuellement utilisés dans ce domaine.

De tels flux intenses sont rencontrés sur les boucliers avant de véhicules spatiaux, ou en protection contre des flux de propulsion.

Dans ce contexte, la présente invention propose un matériau de protection thermique d'une surface selon les revendications annexées.

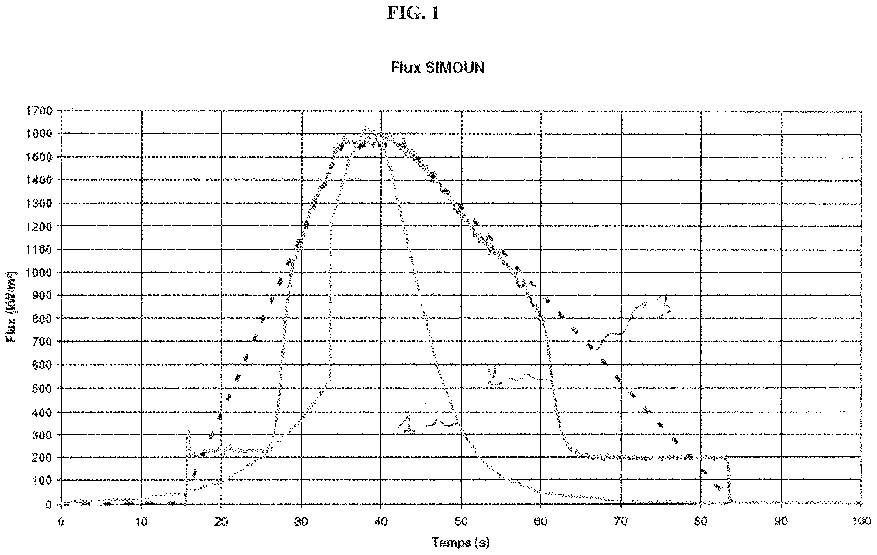

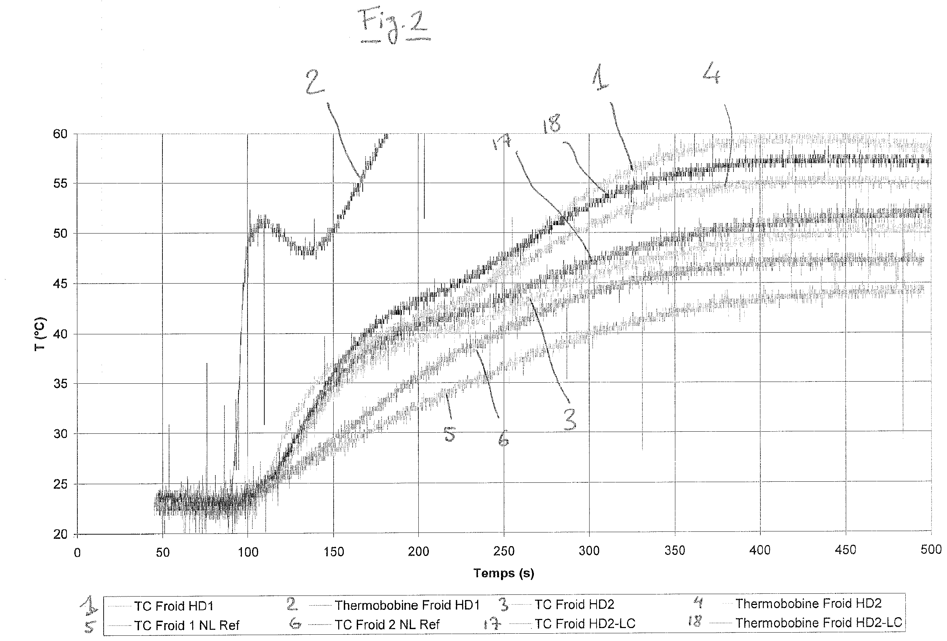

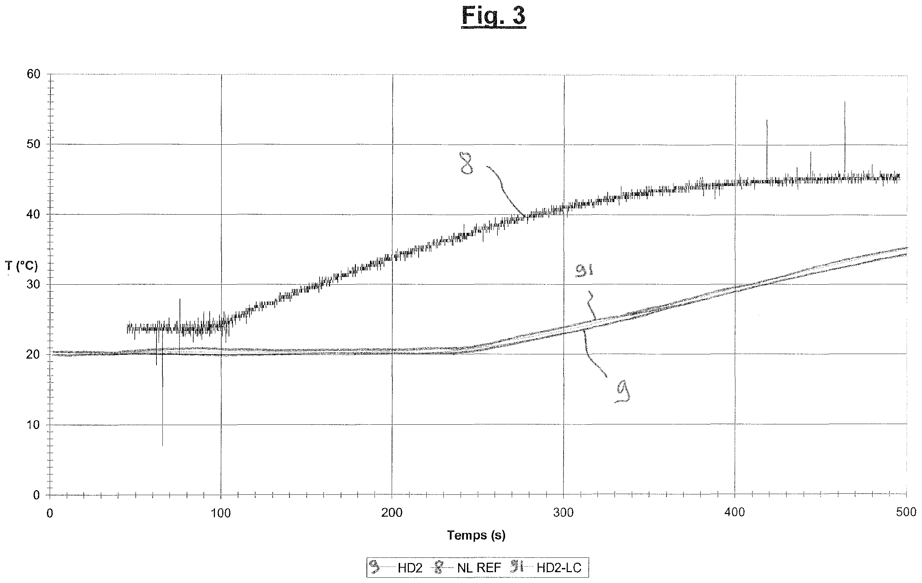

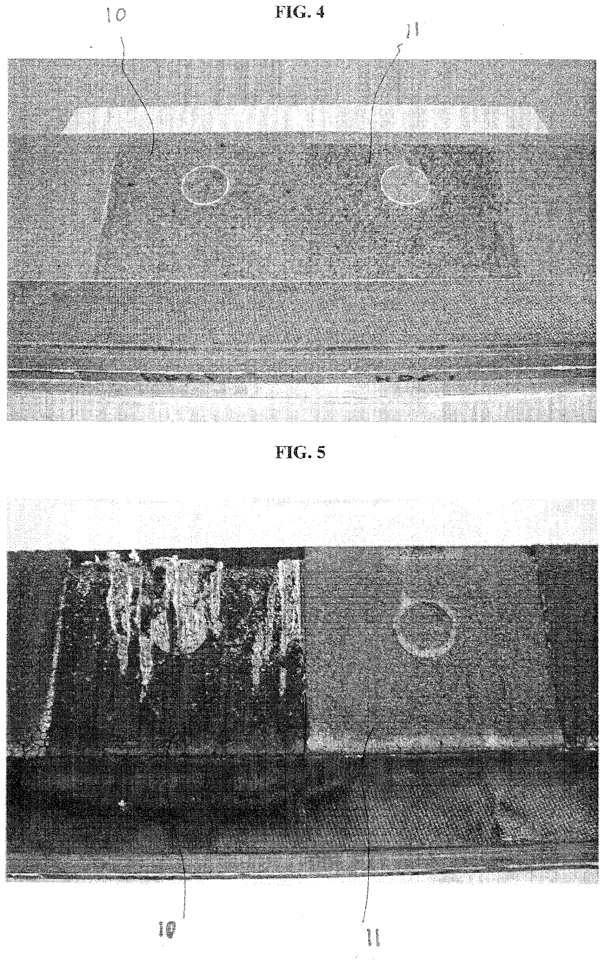

D'autres caractéristiques et avantages de l'invention seront apparents à la lecture de la description qui suit d'un exemple non limitatif de réalisation de l'invention accompagné des dessins qui représentent:
en figure 1: un graphique représentatif d'une simulation de mission de rentrée atmosphérique;
en figure 2: un graphique représentant des courbes de températures de différents matériaux soumis à la simulation de la figure 1;
en figure 3: un graphique reprenant les données mesurées ramenées à iso-masse;
en figure 4: un photo de deux échantillons de matériaux vus avant la simulation de la figure 1;
en figure 5: les matériaux de la figure 4 après la simulation de la figure 1.

Les matériaux de protection thermique utilisés dans le cadre des missions spatiales sont exposés à des sollicitations thermiques importantes pendant des durées courtes.

Il existe des matériaux à projeter sur les surfaces à protéger et des matériaux en plaques, la présente invention ayant trait aux matériaux en plaques.

Du fait de leur principe de fonctionnement, on ne peut caractériser ces matériaux, notamment ceux comportant du liège, selon des critères tels que leur conductivité thermique, leur capacité calorifique et leur diffusivité.

En outre on ne peut pas définir une température à laquelle ils sont soumis par contre on peut caractériser leur condition d'emploi par une loi exprimant le flux thermique appliqué en fonction du temps.

Soumis au flux thermique dû au frottement d'une atmosphère, les matériaux de protection thermique réagissent de façon transitoire : ils s'échauffent par conduction thermique et rayonnement, transmettent la chaleur par leur diffusivité, et se décomposent.

Leur surface exposée au flux peut en outre s'éliminer peu à peu.

Ce dernier comportement dit ablatif est fondamental pour ce type de matériaux du fait qu'il permet de diminuer le flux de chaleur entrant.

Le comportement des matériaux lors de cette ablation doit être tel que le matériau qui se décompose donne un résidu appelé croute qui demeure en surface du matériau.

Il faut que cette croute reste en place malgré les sollicitations mécaniques que peut subir le matériau, vibration et frottement aérodynamique en particulier, de façon en particulier aussi à ne pas modifier le profil aérodynamique de l'objet lors de son parcours atmosphérique, il faut que cette croute soit homogène et le moins fissurée possible et il faut que la formation de cette croute s'accompagne du plus petit recul possible de la surface du matériau, de façon à conserver le pouvoir isolant du matériau.

Pour optimiser les matériaux et obtenir un bon comportement de ces derniers, de nombreux paramètres peuvent être modifiés, le but étant qu'en fin de mission du véhicule spatial l'augmentation de température de la face froide du matériau soit la plus faible possible pour une masse de protection la plus faible possible.

Un critère important d'optimisation des matériaux de protection thermique est leur masse du fait que l'optimisation des solutions techniques en terme de masse est un objectif permanent lorsque l'on construit un véhicule spatial ou un aéronef.

En effet, toute masse gagnée sur la structure se traduit soit par une possibilité plus grande de charge utile, soit une réduction de la masse de propergols à emporter et permet éventuellement une réduction de masse de la structure porteuse.

Les effets de la réduction de masse sont non seulement techniques mais également économiques. Réduire la masse du véhicule est déjà très important sur un lanceur mais l'est encore plus pour une sonde spatiale qui doit retourner sur une planète après un séjour dans l'espace.

Les missions pour lesquelles on a besoin de protection thermiques sont caractérisées en termes de flux thermique, de durée de la sollicitation thermique, et également en termes de charge thermique ce qui correspond au flux total accumulé pendant la mission.

Les matériaux concernés dans la présente invention sont ceux destinés à être utilisés pour des applications à haut flux.

Les applications à haut flux concernées sont des applications pour lesquelles les flux thermiques vont jusqu'à environ 10 MW/m2, avec une charge totale thermique inférieure à 100 MJ/m2.

De tels flux intenses sont rencontrés sur les boucliers avant de tels véhicules, ou en protection contre des flux de propulsion.

Pour réaliser un matériau de protection on se fixe les données suivantes.

La teneur massique en liège recherchée est de 50-80%, la préférence étant entre 65 et 70%.

La proportion de fibres réfractaires est dans la fourchette 1-11% massique, une préférence étant autour de 10%, une autre étant entre 1 et 5%.

Les fibres réfractaires utilisées ici sont des fibres de carbone de type T300 de la société Toray en 6000 filaments.

Ces fibres sont broyées pour les ramener à une longueur comprise entre 0,5 et 4 mm et en faire ainsi des fibres courtes.

Elles sont choisies pour leur nature réfractaire, c'est à dire leur capacité à supporter de hautes températures, disons au dessus de 1000 ou 1500 °C.

Outre les fibres de carbone on peut utiliser d'autres fibres, par exemple des fibres d'Alumine.

Les résines applicables sont les résines ayant un fort taux de coke, c'est à dire la quantité de carbone qu'on obtient quand on les chauffes à 1000°C en atmosphère neutre telle qu'azote.

Cette mesure se fait sur un appareil classique d'analyse thermique capable de monter à 1000°C sous azote.

Les taux de coke recherchés sont supérieurs à 50%, et s'obtiennent avec des résines qui ont en général des cycles aromatiques, comme les phénoliques, mais aussi les furaniques, les brais et d'autres.

Les résines phénoliques sont un cas particulier mis en oeuvre dans l'exemple.

La proportion de résine est entre 10 et 30% massique et de préférence entre 20 et 25% massique.

La teneur en fongicide prévue est comprise entre 0,5 et 1,5%

Des matériaux appelés HD1, HD2 et HD2-LC ont été testés dans un but comparatif.

La masse volumique souhaitée pour ces matériaux était de 415+/-5kg/m3.

Le matériau HD1 est réalisé avec une résine silicone, les matériaux HD2 et HD2-LC avec une résine phénolique, le matériau HD2-LC ayant en outre une faible taux de fibres courtes de carbone.

Les plaques de test avaient des dimensions de 110x160x20mm, leur composition est donnée par le tableau qui suit, les cases marquées X correspondent à une absence de composant.

Les caractéristiques de ces échantillons sont résumées dans les tableaux ci-dessous.

| Composants | HD1 (% massique) | HD2 (% massique) | HD2-LC (% massique) |
|---|---|---|---|
| Résine phénolique | X | 21-24 | 23-25 |
| Résine silicone RTV 615 | 23-26 | X | X |
| Catalyseur RTV 615 | 2-3 | X | X |
| Liège ignifugé | 45-48 | 65-68 | 70-73 |
| Ecosphères de silice | 12-14 | X | X |
| Fibres courtes de carbone | 12-14 | 9-11 | 1-3 |
| Fongicide | 0,5-0,7 | 0,8-0,9 | 0,8-1 |

| Température de polymérisation | 125°C | 125°C | 125 |
|---|---|---|---|
| Temps de polymérisation | 4h | 12h | 12h |

Comme dit plus haut, l'objectif de la présente invention est d'optimiser en termes de performance massique les matériaux existants vis-à-vis d'une application à haut flux, jusqu'à 10 MW/m2, et d'obtenir des matériaux nettement moins denses que les matériaux actuellement utilisés dans ce domaine.

Pour tester ces matériaux on simule une rentrée atmosphérique en appliquant un flux de chaleur sur les éprouvettes.

Un exemple de simulation d'une rentrée atmosphérique sur l'avant d'un véhicule spatial est représenté à la figure 1.

C'est une mission du type rentrée sur la planète Mars d'un véhicule ayant la forme aérodynamique classique stable (type capsule Apollo).

La consigne correspondant au besoin mission correspond à la courbe repère 1, l'essai réalisé correspond à la courbe repère 2.

La courbe repère 3 en pointillés correspond la courbe enveloppe acceptée de l'essai.

Les résultats obtenus par les matériaux testés selon cette simulation de mission sont représentés sous forme de courbes décrivant la température à une profondeur donnée du matériau en fonction du temps. De façon générale, plus la courbe est basse, meilleur est le comportement.

La figure 2 est une comparaison des températures obtenues sur la paroi froide des matériaux, c'est à dire à la surface de la structure que l'on veut protéger.

Pour le matériau HD1, la courbe repère 1 correspond à la mesure de température au niveau de la paroi froide du matériau, paroi en contact avec la surface à protéger, la courbe repère 2 correspond à la température au niveau de la thermobobine c'est à dire un petit disque de matériaux, dans lequel on a implanté des thermocouples à différents endroits dans l'épaisseur du matériau.

Ces disques implantés dans les éprouvettes correspondent à la partie circulaire au centre de l'échantillon.

Pour le matériau HD2, La courbe repère 3 correspond à la mesure de température au niveau paroi froide d'un premier échantillon, la courbe repère 4 correspond à la mesure de la température au niveau froid de la thermobobine.

Pour le matériau NORCOAT LIEGE, les courbes 5 et 6 correspondent à des mesures de température sur deux éprouvettes, au niveau de deux endroits différents de la paroi froide.

Enfin, le matériau HD2-LC présente les courbes repérées 17 et 18 respectivement au niveau paroi froide et thermobobine.

Ces courbes restent dans la moyenne des autres matériaux.

Toutefois, les résultats précédemment donnés sont à iso épaisseur, ce qui ne correspond pas à l'objectif recherché d'optimisation de masse.

Pour prendre en compte cet objectif, il faut reformuler les résultats et les présenter à iso masse.

C'est ce que représente la figure 3 où l'on compare à iso masse de protection, c'est à dire en ramenant la masse du matériau testé à la masse du matériau de référence, les températures de paroi froide pour les matériaux HD2, HD2-LC et le matériau de référence NORCOAT LIEGE (NL).

Selon les légendes de la figure, la courbe 8 correspond au matériau de référence, la courbe 9 est la correction de mesure à iso-masse pour le matériau HD2 et la courbe 91 est la correction de mesure à iso-masse pour le matériau HD2-LC.

Ceci permet de constater que à iso masse, le bouclier thermique fait avec le nouveau matériau est bien plus performant que le bouclier fait avec le matériau de référence.

La courbe 9 du matériau HD2 et la courbe 91 du matériau HD2-LC à masse surfacique équivalente montrent bien que ces matériaux sont plus performants que le matériau NL de référence.

Les figures 4 et 5 représentent des vues d'éprouvettes HD1 repère 10 et HD2 repère 11 respectivement avant et après simulation de la mission.

Comme on le voit à la figure 5, le matériau HD1 repère 10 est fortement dégradé, il y a eu des départs brusques de matière. Cela est probablement dû à la présence de résine silicone dans le matériau et à l'hétérogénéité globale de l'éprouvette. L'ablation a été très faible dans les zones saines.

L'état de surface du matériau HD2 repère 11 est très propre. L'ablation étant légèrement moindre avec un matériau de densité inférieure, le résultat est considéré comme bon.

Par ailleurs, la prise en compte de l'ablation montre également une amélioration très nette du comportement du matériau HD2 par rapport à l'art antérieur : moins d'ablation signifiant moins de masse éliminée en fonctionnement, et donc moins de masse initiale à emporter.

La densité, la conductivité et la diffusivité des matériaux sont résumées dans le tableau qui suit.

| | HD1 | HD2 | HD2-LC | Art antérieur (Norcoat) |
|---|---|---|---|---|
| Densité (matériau non dégazé) | 0.41 (0,40-0,42) | 0.41 (0,40-0,42) | 0.41 (0,40-0,42) | 0,47 |
| Densité (matériau dégazé | 0.38 (0,37-0,39 | 0.38 (0,37-0,39 | 0.38 (0,37-0,39 | 0,45 |
| Conductivité 20°C(W/m.°C) | 0,15 | 0,15 | 0,15 | 0.1 |
| Diffusivité 20°C 10-6 m2/s | 0,18 | 0,14 | 0,14 | 0,083 |

Selon ce tableau les matériaux HD1, HD2 et HD2-LC sont très proches et d'une densité voisine mais légèrement inférieure à celle du matériau NORCOAT LIEGE connu. Par contre ce dernier matériau a une conductivité thermique et une diffusivité à 20°C plus faible ce qui fait que ce matériau serait plus isolant.

La densité des matériaux est fonction de leur pressage dans le moule servant à les fabriquer.

La densité recherchée est entre 0,35 et 0,41.

Deux échantillons, HD1-1 et HD1-2 de test du premier matériau utilisant de la résine silicone ont été réalisés et testés.

Les conditions ambiantes étaient une température de 20°C avec une hygrométrie de 56 %.

Les matériels utilisés comprennent un moule de laboratoire de 150x150 mm soit 378,7cc, un mélangeur pétrin de la société Kenwood de volume 8 litres, une étuve électrique 50-250°C et une balance électronique Viper de la société Mettler de capacité 3 Kg.

L'objectif était de réaliser des échantillons de masse volumique 415 +/- 5 kg/m³ et de masse 157,2 gr.

Les composants pour fabriquer le matériau d'essai HD1 sont décrits dans le tableau suivant:

| Composants: | Fournisseur | PCM | Poids gr |
|---|---|---|---|
| Granulés de liège 0.5/1 mm Ignifugés | Amorim-HPK | 46,71 | 73,43 |
| Silicone RTV 615 | Bayer | 24,45 | 38,44 |
| Catalyseur RTV | Bayer | 2,45 | 3,85 |
| Ecosphères Si 200 | Trelleborg | 12,91 | 20,3 |
| Fibres de carbone | Apply-carbon | 12,91 | 20,3 |
| Fongicide | Borcher's | 0,57 | 0,9 |

Le mode opératoire pour la réalisation du premier échantillon HD1-1 est décrit dans le tableau suivant:

| Mode opératoire: | HD1-1 |
|---|---|
| Pesée des composants | 15 min |
| Mélange Ecosphères et carbone | 5 min |
| Mélange RTV et catalyseur dans le bol du mélangeur | 1,5 min |
| Ajout de 16 gr de liège et mélange 30 secondes à vitesse 1 | 30 sec |
| Récupération résine sur fond du bol. | 30 sec |
| Ajout et mélange du liège restant | 5 min |
| Incorporation du mélange SiO2-carbone à vitesse 1 | 4 min |
| Homogénéisation à vitesse 2 | 1 min |
| Remplissage du moule avec le mélange | 30 sec |
| Compression jusqu'à fermeture du moule | 30 sec |
| Pose et maintien du moule dans l'étuve à 120°C | 2h05 |
| Refroidissement du moule à l'air libre | 2h |
| Démoulage de l'échantillon et contrôle | 5 min |

Pour le matériau HD1-2 seul le temps d'étuvage à 120°C de 2h15 diffère.

Les échantillons HD1-1 et HD1-2 obtenus ont un aspect homogène, une masse démoulée respectivement de 153,5 et 155,2 gr, leur masse finale étant respectivement de 154,4 et 155,5 gr ce qui montre une reprise de masse après démoulage.

De même, deux échantillons, HD2-1 et HD2-2 de test du second matériau utilisant de la résine phénolique ont été réalisés et testés.

Les conditions ambiantes étaient une température de 20°C avec une hygrométrie de 56 %.

Les matériels utilisés comprennent un moule de laboratoire de 150x150 mm soit 378,7cc, un mélangeur pétrin de la société Kenwood de volume 8 litres, une étuve électrique 50-250°C et une balance électronique Viper de la société Mettler de capacité 3 Kg.

L'objectif était de réaliser des échantillons de masse volumique 415 +/- 5 kg/m³ et de masse 157,2 gr.

Les composants pour fabriquer le matériau d'essai HD2 sont décrits dans le tableau suivant:

| Composants: | Fournisseur | PCM | Poids gr |
|---|---|---|---|
| Granulés de liège 0.5/1 mm Ignifugés | Amorim-HPK | 66,71 | 104,9 |
| Résine Phénolique | Exxon | 22,71 | 35,7 |
| Fibres de carbone | Apply-carbon | 9,74 | 15,3 |
| Fongicide | Borcher's | 0,84 | 1,32 |

Le mode opératoire pour la réalisation du premier échantillon HD2-1 est décrit dans le tableau suivant:

| Mode opératoire | HD2-1 |
|---|---|
| Pesée des composants | 15 min |
| Mélange résine et fongicide dans le bol du mélangeur | 1 min |
| Ajout de 16 gr de liège et mélange 30 secondes à vitesse 1. | 30 sec |
| Récupération de la résine sur le fond du bol | 30 sec |
| Ajout et mélange du liège restant | 5 min |
| Incorporation très lente des fibres de carbone vitesse 1. | 4 min |
| Homogénéisation à vitesse 2 | 1 min |
| Remplissage du moule avec le mélange | 30 sec |
| Compression jusqu'à fermeture du moule | 30 sec |
| Etuvage du moule dans l'étuve à 120°C | 2h |
| Refroidissement du moule à l'air libre | 2h |
| Démoulage de l'échantillon et contrôle | 5 min |

La seule différence pour l'échantillon HD2-2 par rapport à l'échantillon HD2-1 est un étuvage de 2h40.

L'aspect du matériau HD2 après réalisation est très homogène, la masse démoulée des échantillons HD2-1 ET HD2-2 est respectivement de150,3 et 148,8 grammes, leur masse finale étant de 150,0 et 148,8 gr ce qui correspond à une légère perte de masse au séchage.

Le matériau HD2-LC est réalisé avec les matériaux suivants:

| Composants: | Fournisseur | PCM | Poids gr |
|---|---|---|---|
| Granulés de liège 0.5/1 mm Ignifugés | Amorim-HPK | 72,3 | 107,7 |
| Résine Phénolique | Exxon | 24,4 | 36,4 |
| Fibres de carbone | Apply-carbon | 2,4 | 3,6 |
| Fongicide | Borcher's | 0,9 | 1,3 |

Le mode opératoire est le même que pour le matériau HD2 et les masses finales sont de 149 et 151,2.

Pour qualifier le matériau, il est nécessaire de prendre en compte l'ablation du matériau lors de l'essai.

Les résultats montrent également une amélioration très nette du comportement du matériau HD2 par rapport à l'art antérieur : moins d'ablation signifiant moins de masse éliminée en fonctionnement, et donc moins de masse initiale à emporter.

Le matériau HD2 qui présente une faible ablation et qui permet à iso masse de tripler le temps d'atteinte de la température de 30 °C par rapport au matériau antérieur (450 au lieu de 150 secondes) apparaît bien adapté pour des applications à haut maxima de flux thermique, dans la gamme allant jusqu'à 5 à 10 MW/m2 même si les essais effectués sont limités à 2 Mw/m2.

Le matériau de l'art antérieur, à priori meilleur en isolation thermique, est donc finalement moins efficace que le matériau HD2 qui apparaît bien adapté à l'application envisagée.

De même le matériau HD2-LC présente un comportement satisfaisant tant en température qu'en ablation.

Au delà de l'application initiale de réalisation de protections thermiques pour véhicules spatiaux, la présente invention peut trouver de nombreuses autres application comme protection thermique dans le domaine du transport ferroviaire, maritime, aéronautique ou terrestre; le domaine de l'industrie tels que les machines, le domaine de la construction comme les protections coupe feu.

## Revendications

1. Matériau ablatif de protection thermique d'une surface d'un véhicule spatial réalisé à partir d'un mélange de composition adaptée pour des flux thermique dans la gamme de 0,5 à 10 MW/m², **caractérisé en ce qu'**il comprend une résine à taux de coke supérieur à 50%, soit la quantité de carbone obtenue par chauffage à 1000°C en atmosphère neutre telle que sous azote dont le pourcentage massique dans le mélange est de 10 à 30 %,
des granulés de liège et des fibres réfractaires d'une longueur comprise entre 0,4mm et 4mm sélectionnées dans le groupe constitué par le carbone et l'alumine, la proportion de granulés de liège dans le mélange correspondant à un pourcentage massique de 50 à 80% et pour lequel la proportion de fibres réfractaires en complément correspond à un pourcentage massique dans le mélange de 1 à 11%, le matériau étant dépourvu de charges microsphères et étant pressé dans un moule pour présenter une densité après dégazage de 0,35 à 0,41.

2. Matériau de protection thermique selon la revendication 1 pour lequel la proportion de granules de liège est entre 64 et 74 %.

3. Matériau de protection thermique selon la revendication 1 ou 2 pour lequel le pourcentage massique de résine dans le mélange est entre 20 et 26%.

4. Matériau de protection thermique selon l'une quelconque des revendications précédentes pour lequel le pourcentage massique de fibres réfractaires est entre 9 et 11%.

5. Matériau de protection thermique selon l'une quelconque des revendications 1 à 3 pour lequel le pourcentage massique de fibres réfractaires est entre 1 et 4%.

6. Matériau de protection thermique selon l'une quelconque des revendications précédentes comprenant un fongicide selon une proportion massique dans le mélange de 0,5 à 1,5 %.

7. Matériau de protection thermique selon l'une quelconque des revendications précédentes pour lequel le liège est un liège ignifugé.

8. Matériau de protection thermique selon la revendication 1 comprenant en pourcentage massique: 21 à 24% de résine phénolique, 65 à 68% de granules de liège ignifugé, 9 à 11% de fibres de carbone ou d'alumine, 0,8 à 0,9% de fongicide et ayant une densité entre 0.37 et 0.39 matériau dégazé.

9. Matériau de protection thermique selon la revendication 1 comprenant en pourcentage massique: 23 à 25% de résine phénolique, 70 à 73% de granules de liège ignifugé, 1 à 3% de fibres de carbone ou d'alumine, 0,8 à 1% de fongicide et ayant une densité entre 0.37 et 0.39 matériau dégazé.

10. Matériau de protection thermique selon l'une quelconque des revendications précédentes pour lequel les fibres réfractaires sont des fibres de carbone.

11. Matériau de protection thermique selon l'une quelconque des revendications 1 à 9 pour lequel les fibres réfractaires sont des fibres d'alumine.

12. Matériau de protection thermique selon l'une quelconque des revendications précédentes pour lequel les granules de liège sont des granules de 0,5mm à 1mm ignifugés.

## Patentansprüche

1. Wärmeableitender Werkstoff zum Schutz einer Oberfläche eines Raumfahrzeugs vor Hitze, der ausgehend von einem Gemisch mit einer für Wärmeströme im Bereich von 0,5 bis 10 MW/m² ausgelegten Zusammensetzung hergestellt wird, **dadurch gekennzeichnet, dass** er ein Harz mit einem Koksanteil über 50%, was der Menge an Kohlenstoff entspricht, die durch Erhitzen bei 1000°C in neutraler Atmosphäre, wie unter Stickstoff, erhalten wird, dessen Anteil in Massenprozent in dem Gemisch 10 bis 30% beträgt,
Korkgranulate und hitzebeständige Fasern mit einer Länge zwischen 0,4 mm und 4 mm, ausgewählt aus der aus Kohlenstoff und Aluminium bestehenden Gruppe, umfasst, wobei der Anteil an Korkgranulaten in dem Gemisch einem Anteil in Massenprozent von 50 bis 80% entspricht und wobei der Anteil an hitzebeständigen Fasern als Ergänzung einem Anteil in Massenprozent in dem Gemisch von 1 bis 11% entspricht, wobei der Werkstoff keine Mikrokugelfüllstoffe enthält und in einer Form gepresst wird, damit er eine Dichte nach Entgasen von 0,35 bis 0,41 aufweist.

2. Hitzeschutzwerkstoff nach Anspruch 1, wobei der Anteil an Korkgranulaten zwischen 64 und 74% beträgt.

3. Hitzeschutzwerkstoff nach Anspruch 1 oder 2, wobei der Anteil an Harz in Massenprozent in dem Gemisch zwischen 20 und 26% beträgt.

4. Hitzeschutzwerkstoff nach einem der vorhergehenden Ansprüche, wobei der Anteil an hitzebeständigen Fasern in Massenprozent zwischen 9 und 11% beträgt.

5. Hitzeschutzwerkstoff nach einem der Ansprüche 1 bis 3, wobei der Anteil an hitzebeständigen Fasern in Massenprozent zwischen 1 und 4% beträgt.

6. Hitzeschutzwerkstoff nach einem der vorhergehenden Ansprüche, der ein Fungizid in einem Massenanteil in dem Gemisch von 0,5 bis 1,5% enthält.

7. Hitzeschutzwerkstoff nach einem der vorhergehenden Ansprüche, wobei es sich bei dem Kork um einen feuerfesten Kork handelt.

8. Hitzeschutzwerkstoff nach Anspruch 1, der in Massenprozent Folgendes umfasst: 21 bis 24% Phenolharz, 65 bis 68% Granulate von feuerfestem Kork, 9 bis 11% Kohlenstoff- oder Aluminiumfasern, 0,8 bis 0,9% Fungizid, und der eine Dichte zwischen 0,37 und 0,39 des entgasten Werkstoffs aufweist.

9. Hitzeschutzwerkstoff nach Anspruch 1, der in Massenprozent Folgendes umfasst: 23 bis 25% Phenolharz, 70 bis 73% Granulate von feuerfestem Kork, 1 bis 3% Kohlenstoff- oder Aluminiumfasern, 0,8 bis 1% Fungizid, und der eine Dichte zwischen 0,37 und 0,39 des entgasten Werkstoffs aufweist.

10. Hitzeschutzwerkstoff nach einem der vorhergehenden Ansprüche, wobei es sich bei den hitzebeständigen Fasern um Kohlenstofffasern handelt.

11. Hitzeschutzwerkstoff nach einem der Ansprüche 1 bis 9, wobei es sich bei den hitzebeständigen Fasern um Aluminiumfasern handelt.

12. Hitzeschutzwerkstoff nach einem der vorhergehenden Ansprüche, wobei es sich bei den Korkgranulaten um feuerfeste Granulate von 0,5 mm bis 1 mm handelt.

## Claims

1. Ablative material for thermal protection of a surface of a space craft, made from a mixture of composition suitable for heat fluxes in the range of 0.5 to 10 MW/m², **characterized in that** it comprises a resin with a coke content greater than 50%, that is to say the amount of carbon obtained by heating at 1000°C in a neutral atmosphere, such as under nitrogen, of which the weight percentage in the mixture is from 10% to 30%,
cork granules and refractory fibres between 0.4 mm and 4 mm in length, selected from the group consisting of carbon and alumina, the proportion of cork granules in the mixture corresponding to a weight percentage of 50% to 80% and for which the proportion of refractory fibres as a supplement corresponds to a weight percentage in the mixture of 1% to 11%, the material being devoid of microsphere fillers and being pressed into a mould so as to have a density after degassing of 0.35 to 0.41.

2. Thermal protection material according to Claim 1, for which the proportion of cork granules is between 64% and 74%.

3. Thermal protection material according to Claim 1 or 2, for which the weight percentage of resin in the mixture is between 20% and 26%.

4. Thermal protection material according to any one of the preceding claims, for which the weight percentage of refractory fibres is between 9% and 11%.

5. Thermal protection material according to any one of Claims 1 to 3, for which the weight percentage of refractory fibres is between 1% and 4%.

6. Thermal protection material according to any one of the preceding claims, comprising a fungicide in a weight proportion in the mixture of 0.5% to 1.5%.

7. Thermal protection material according to any one of the preceding claims, for which the cork is a fireproofed cork.

8. Thermal protection material according to Claim 1, comprising, as weight percentage: 21% to 24% of phenolic resin, 65% to 68% of fireproofed cork granules, 9% to 11% of carbon or alumina fibres and 0.8% to 0.9% of fungicide, and having a density between 0.37 and 0.39 degassed material.

9. Thermal protection material according to Claim 1, comprising, as weight percentage: 23% to 25% of phenolic resin, 70% to 73% of fireproofed cork granules, 1% to 3% of carbon or alumina fibres and 0.8% to 1% of fungicide, and having a density between 0.37 and 0.39 degassed material.

10. Thermal protection material according to any one of the preceding claims, for which the refractory fibres are carbon fibres.

11. Thermal protection material according to any one of Claims 1 to 9, for which the refractory fibres are alumina fibres.

12. Thermal protection material according to any one of the preceding claims, for which the cork granules are fireproofed granules of 0.5 mm to 1 mm.
